# EUROPEAN PATENT APPLICATION

(11) **EP 4 737 306 A1**
(43) Date of publication of application: **06.05.2026**
(21) Application number: 24209782.2
(22) Date of filing: 30.10.2024
(51) Int. Cl.: B63H 1/10

(54) **SYSTEM AND METHOD FOR BLADE PITCH CONTROL OF CYCLOIDAL MARINE PROPULSION SYSTEM**

(71) Applicant: ABB SCHWEIZ AG, 5400 Baden (CH)
(72) Inventor: LIU, Bin, 723 50 Västerås (SE); FRANSSON, Peter, 723 35 Västerås (SE); PELJO, Veli-Pekka, 00980 Helsinki (FI)
(74) Representative: Zimmermann & Partner Patentanwälte mbB

(57) **Abstract**

A blade pitch control system for a cycloidal marine propulsion system is provided. The cycloidal marine propulsion system comprises a rotating wheel, and a plurality of rotating blades attached to the rotating wheel and individually rotatable with respect to the rotating wheel. The blade pitch control system comprises at least one rotating wheel position sensor, configured to provide a sensor signal indicative of a measured position of the rotating wheel, a wheel position estimation unit, configured to determine an estimated position of the rotating wheel based upon the sensor signal of the at least one rotating wheel position sensor; and a blade pitch determining unit, configured to determine a blade pitch set point for at least one of the plurality of rotating blades based upon the estimated position of the rotating wheel. Determining the estimated position of the rotating wheel comprises a data processing of the sensor signal.

## Description

### TECHNICAL FIELD

Embodiments of the present disclosure relate to a system for controlling a blade pitch in a cycloidal marine propulsion system. Further embodiments relate to a method for controlling a blade pitch in a cycloidal marine propulsion system.

### BACKGROUND

Cycloidal marine propulsion systems provide an efficient way to propel marine vessels. Further, cycloidal marine propulsion systems allow for an improved maneuverability of marine vessels. In cycloidal marine propulsion systems, a rotating wheel with rotatable blades attached to the rotating wheel provides thrust. A direction and amount of the thrust may be controlled via a rotating speed of the rotating wheel and via a pitch of the rotatable blades. In the cycloidal marine propulsion system, the pitch of the rotating blades may be controlled individually. The pitch of the rotating blades is determined based upon the position of the rotating wheel. For an efficient operation of the cycloidal marine propulsion system, ensuring a correct pitch of each of the rotating blades at every position of the rotating wheel is essential. In particular, the pitch of the rotating blades is controlled based upon the position of the rotating wheel.

The position of the rotating wheel is typically determined by at least one position sensor. A sensor signal of the at least one position sensor, being indicative of a measured position of the rotating wheel, is employed to set a blade pitch set point or a blade pitch function. Inaccuracies in the sensor signal, leading to the sensor signal misrepresenting the position of the rotating wheel, may result in the blade pitch not being set accurately and may thus be associated with a reduced efficiency, disturbances and higher wear and tear of the cycloidal marine propulsion system.

### DISCLOSURE OF THE INVENTION

In the view of the foregoing, the present disclosure is directed to a blade pitch control system for a cycloidal marine propulsion system and a method of determining a blade pitch set point of a rotating blade of a cycloidal marine propulsion system.

According to an aspect of the present disclosure, a blade pitch control system for a cycloidal marine propulsion system is provided. The cycloidal marine propulsion system comprises a rotating wheel, and a plurality of rotating blades attached to the rotating wheel and individually rotatable with respect to the rotating wheel. The blade pitch control system comprises at least one rotating wheel position sensor, configured to provide a sensor signal indicative of a measured position of the rotating wheel, a wheel position estimation unit, configured to determine an estimated position of the rotating wheel based upon the sensor signal of the at least one rotating wheel position sensor; and a blade pitch determining unit, configured to determine a blade pitch set point for at least one of the plurality of rotating blades based upon the estimated position of the rotating wheel. Determining the estimated position of the rotating wheel comprises a data processing of the sensor signal.

According to another aspect of the present disclosure, a cycloidal marine propulsion system comprising a rotating wheel, a plurality of rotating blades attached to the rotating wheel and individually rotatable with respect to the rotating wheel, and a blade pitch control system according to any of the embodiments described herein is provided.

According to another aspect of the present disclosure, a marine vessel comprising a cycloidal marine propulsion system with a cycloidal marine propulsion system comprising a blade pitch control system according to any of the embodiments described herein is provided.

According to another aspect of the present disclosure, a method of determining a blade pitch set point of a rotating blade of a cycloidal marine propulsion system is provided. The cycloidal marine propulsion system comprises a rotating wheel and a plurality of rotating blades attached to the rotating wheel and individually rotatable with respect to the rotating wheel. The method comprises receiving a sensor signal indicative of a measured position of the rotating wheel from at least one rotating wheel position sensor; determining an estimated position of the rotating wheel based upon the sensor signal of the at least one rotating wheel position sensor; and determining the blade pitch set point for at least one of the plurality of rotating blades based upon the estimated position of the rotating wheel. Determining the estimated position of the rotating wheel comprises a data processing of the sensor signal.

According to another aspect of the present disclosure, a method of controlling a cycloidal marine propulsion system, using a blade pitch information obtained from a blade pitch control system according to any of the embodiments described herein is provided.

According to some embodiments, the cycloidal marine propulsion system is configured to propel a marine vessel. The marine vessel comprises seagoing or inland marine vessels. In particular, the marine vessel comprises ships and boats. In some embodiments, the marine vessel comprises ferries, in particular single- and double-ended ferries, cruise ships, water buses, yachts. In some embodiments, the marine vessel comprises offshore energy vessels, in particular service operation vessels (SOVs), cable laying vessels (CLVs), foundation installation vessels (FIVs), offshore construction (OCVs) and support vessels (OSVs), platform supply vessels (PSVs), and anchor-handling tug supply vessels (AHTS). In some embodiments, the marine vessel comprises research and survey vessels or other special purpose vessels. According to some embodiments, the marine vessel comprises merchant ships, in particular for transporting goods.

The marine vessel comprises a hull. According to some embodiments, the rotating wheel is attached to the hull of the marine vessel, in particular at the bottom of the hull. In some embodiments, the hull comprises a recess. In particular, the recess of the hull is configured for receiving the rotating wheel of the cycloidal marine propulsion system. The rotating wheel typically rotates with respect to the hull of the marine vessel. A position of the rotating wheel with respect to the hull may be indicated by a polar angle of the rotating wheel with respect to the hull. In particular, a default configuration may be defined by a polar angle of 0° and a rotation of the rotating wheel compared to the default configuration may be associated with a polar angle measured with respect to the default configuration. In some embodiments, the default configuration may be fixed. In some embodiments, the default configuration may be initially defined at a certain point in time and may be redefined at regular time intervals, upon a request of an operator of the cycloidal marine propulsion system, and/or after the rotating wheel is set in motion.

A plurality of electrically driven rotating blades are attached to the rotating wheel. In particular, two, three, four, five, six or more rotating blades may be attached to the rotating wheel. The rotating blades are rotatable with respect to the rotating wheel. In particular, the rotating blades are individually rotatable with respect to the rotating wheel. In other words, each of the plurality of rotating blades can be controlled individually, in particular the pitch of each of the rotating blades can be controlled individually. For each of the rotating blades, the rotating wheel comprises a rotating blade electric motor driving the respective rotating blade. In some embodiments, the pitch of the plurality of rotating blades may be adjusted with no angular restriction. In particular, the plurality of rotating blades may be rotatable by at least 360°. The rotating wheel comprises a plurality of recesses to receive the plurality of electrically driven rotating blades.

A blade pitch control system controls a blade pitch of at least one of the rotating blades. Typically, the blade pitch control system controls the blade pitch of each of the rotating blades. The blade pitch control system may comprise a plurality of subsystems, in particular one subsystem for each blade of the rotating blades. Typically, the blade pitch control system is an integrated system controlling the blade pitch of at least one of the rotating blades in an integrated controller, exemplarily in a programmable logic controller.

The blade pitch control system comprises at least one rotating wheel position sensor. In some embodiments, the blade pitch control system comprises a plurality of rotating wheel position sensors, in particular at least 2, 3, 4, 5, 8 or more sensors. The at least one rotating wheel position sensor may comprise a magnetic rotary sensor, a rotary variable differential transformer or a rotary potentiometer. The rotating wheel position sensor may be arranged substantially at the rotating axis of the rotating wheel. In some embodiments, the rotating wheel sensor may be configured to sense the presence of a signaling device in its vicinity. Exemplarily, the rotating wheel sensor may be positioned stationary with the rotating wheel passing by the rotating wheel sensor. The rotating wheel sensor may be configured to sense the presence of at least one signaling device attached to the rotating wheel. The sensed signal induced by the at least one signaling device may be indicative of a particular polar angle of the rotating wheel. A blade pitch control system comprising a plurality of rotating wheel sensors typically comprises a plurality of different types of rotating wheel sensors. Having a plurality of different types of rotating wheel sensors may advantageously allow to compensate disadvantages of specific rotating wheel sensor types.

The at least one rotating wheel position sensor is configured to provide a sensor signal indicative of a measured position of the rotating wheel. The sensor signal may comprise a direct rotation position information, i.e. a polar angle, or the sensor signal may comprise a sensor output that has to be converted to indicate a measured position of the rotating wheel; exemplarily, the sensor output may comprise a voltage or a current. The sensor signal may comprise an analog or a digital signal.

In some embodiments, the sensor signal may comprise additional sensor information, exemplarily a sensor state, e.g. whether the sensor is operating, a time stamp, or a sensor identification signal. The sensor signal may be provided continuously or in intervals. Particularly, the sensor signal may be provided after a predefined change in the position of the rotating wheel or in regular time intervals. Exemplarily, the sensor signal may be provided at least every 10 µs, every 50 µs, every 200 µs, every 1 ms, or every 5 ms.

Based upon the sensor signal of the at least one rotating wheel position sensor, a wheel position estimation unit determines an estimated position of the rotating wheel. Determining the estimated position comprises a data processing of the sensor signal. In particular, data processing may comprise an editing, a selecting, a deleting, a merging, a validating or an aggregating of the sensor signal. Data processing of the sensor signal may advantageously allow to improve the data quality of the sensor signal and to reduce influences of noise or interruptions in data transmission upon a blade pitch set point.

The estimated position of the rotating wheel determined by the wheel position estimation unit is based upon the sensor signal. Data processing of the sensor signal advantageously allows to improve a quality of the sensor signal, and thus to provide an estimated position which better represents a real position of the rotating wheel compared to the sensed signal indicative of a measured position of the rotating wheel. In particular, errors in the sensed signal, that may originate from sensor noise, or interruptions in a communication of the at least one rotating wheel position sensor with the wheel position estimation unit, may be omitted and/or corrected. The estimated position of the rotating wheel provides an improved basis for determining the blade pitch set point for at least one of the plurality of rotating blades. In particular, the estimated position of the rotating wheel may provide a smoother and more continuous signal.

In some embodiments, data processing of the sensor signal comprises a storing, in other words recording, of the sensor signal. In particular, the sensor signal may be stored by the blade pitch determining unit. Storing may comprise a temporary storing, exemplarily in a volatile computer memory, or may comprise a non-temporary permanent storing, exemplarily in a non-volatile computer memory. Recording of the sensor signal may comprise a recording over time, in particular over a pre-determined amount of time, exemplarily over at least 200 µs, 1 ms, 5 ms, 50 ms, 500 ms, 1 s or 10 s. Recording of the sensor signal may comprise a recording over at least one rotation cycle. Exemplarily, the sensor signal may be recorded over 1, 2, 3, 4, 5, 8, 10, 50, 100 or more rotation cycles. The stored, or recorded, sensor signal may be employed by the wheel position estimation unit to advantageously identify patterns in the sensor signal. In particular, irregularities repeatably present in the sensor signal may be identified. Exemplarily, an irregularity in the sensor signal may occur at a specific position of the rotating wheel or with a specific frequency, particularly in the time-domain. Identifying such a pattern may advantageously allow to identify sources of noise or sources of interruptions in the sensor signal. Accordingly, data processing may be performed on the sensor signal to remove the identified noise or interruptions in the sensor signal to provide an estimated position of the rotating wheel.

In some embodiments, data processing comprises a smoothing of the sensor data. In particular, the sensor data may be averaged over a predefined time. Exemplarily, the sensor data may be averaged over 200 µs, 1 ms, 5 ms, 50 ms, 500 ms or 1 s. The sensor data may be averaged as a moving average. Typically, sensor data being stored may be smoothed. Averaging the sensor data may particularly allow to reduce the influence of random noise overlaying the sensor signal and more particularly overlaying the measured position of the rotating wheel.

In some embodiments, the data processing comprises a filtering of the sensor data. Filtering of the sensor data may lead to the sensor data being smoothed as well. In some embodiments, a filtering may be selected to achieve a smoothing of the sensor data. Filtering of the sensor signal may comprise applying a filter on at least part of the sensor signal. Typically, sensor data being stored may be filtered. Filtering the sensor signal may comprise applying a phase-locked loop (PLL), a Kalman-filter, a Fast Fourier Transform (FFT) filter, a low pass filter, a Savitzky-Golay filter, a median filter, a percentile filter or a particle filter. Filtering the sensor signal may comprise including information on the settings of the rotating wheel. In particular, frequency ranges of filters may be selected based upon the rotating frequency of the rotating wheel. The blade pitch control system may be in communication with a rotating wheel controller or a cycloidal marine propulsion system controller to receive information on the rotating frequency of the rotating wheel and/or a rotating frequency set point. In typical embodiments, filtering the sensor signal may particularly allow to reduce or remove random noise overlaying the sensor signal. Filtering the sensor signal, particularly employing a filter optimized for shot noise (e.g. a percentile filter), may allow to reduce or remove inaccuracies in the sensor signal originating from transmission errors, exemplarily from a loss of transmission of the sensor signal.

In some embodiments, data processing comprises an extrapolating of the sensor data. In particular, future positions of the rotating wheel may be estimated based upon present and/or past positions of the rotating wheel. Typically, extrapolating comprises employing a mathematical model of the rotating wheel, particularly of the rotation of the rotating wheel. In particular, the extrapolating comprises a fitting of a mathematical function, or of a plurality of mathematical functions, upon the sensor signal. Exemplarily, the mathematical function may comprise a sinusoidal function or an n-th degree polynomial. The mathematical function comprises at least one variable to be determined by a fitting procedure. The function determined by the fitting may be extrapolated to estimate a future estimated position of the rotating wheel. In some embodiments, the function determined by the fitting may be extrapolated to estimate an estimated position of the rotating wheel for instances where no sensor signal is transmitted or where an erroneous sensor signal is transmitted. In some embodiments, an extrapolation, a smoothing and/or a filtering of the sensor data may be combined. Typically, the extrapolating of the sensor data comprises an extrapolation by at least 1 ms, 5 ms, 50 ms, 500 ms or 1 s. In some embodiments, extrapolated estimated positions of the rotating wheel may be compared with measured positions of the rotating wheel that are measured at a later point in time to improve the extrapolation.

According to some embodiments, the wheel position estimation unit may determine the estimated position of the rotating wheel based upon a plurality of rotating wheel position sensors. Typically, data processing comprises analyzing differences between the sensor signals of each of the plurality of rotating wheel position sensors. In some embodiments, the data processing may comprise sorting the sensor signals of the plurality of rotating wheel position sensors, in particular by a measurement time and/or a sensor type. Typically, data processing comprises a standardization of sensor data, in particular with respect to the data format and/or units employed.

Data processing may comprise sensor fusion of the plurality of rotating wheel position sensors. Particularly, sensor fusion may comprise using information from the plurality of rotating wheel position sensors to improve the overall accuracy of the estimated position of the rotating wheel. Exemplarily, sensor fusion may comprise averaging of the sensor signals of the plurality of rotating wheel position sensors or determining a median of the sensor signals of the plurality of rotating wheel position sensors, in particular for sensor signals determined at the same point of time or a very similar point of time. Averaging of the sensor signals may comprise calculating a weighted average of the sensor signals. Weighting may be performed along an accuracy metric for the plurality of rotating wheel position sensors. In some embodiments, sensor fusion may comprise selecting the sensor data of at least one of the plurality of rotating wheel position sensors for further data processing. In particular, sensor fusion may comprise disregarding the sensor signal of at least one of the plurality of rotating wheel position sensors, exemplarily when an inaccuracy is detected for a particular sensor. In some embodiments, sensor fusion may comprise combining information of different frequency ranges from different sensors. Exemplarily, a first sensor may provide low frequency sensor signal information and a second sensor may provide high frequency information. In some embodiments, sensor fusion may comprise controlling a selected sensor signal by other sensor signals of the plurality of sensor signals. Exemplarily, a generally reliable sensor may be controlled by different sensors, exemplarily based upon a different sensor technology, to identify and mitigate inaccuracies of the generally reliable sensor. Sensor fusion may advantageously allow to merge information obtained from the plurality of rotating wheel position sensors and to exploit favorable properties of different types of rotating wheel position sensors. Sensor fusion may therefore allow to determine a more precise estimated position of the rotating wheel.

According to some embodiments, data processing may comprise analyzing the sensor signal to identify a type of noise overlaying the sensor signal of the rotating wheel. In particular, analyzing the sensor signal may comprise analyzing the signal's frequency spectrum, exemplarily by performing a Fast Fourier Transform (FFT), and by comparing the signal frequency spectrum with reference spectra. In some embodiments, the derivative of the sensor signal may be analyzed to determine a loss of transmission of the sensor. In particular, the derivative of the sensor signal exceeding a threshold may indicate a loss of transmission (exemplarily a loss of communication) of the sensor. Based upon an analysis of the sensor signal, data processing may comprise filtering or modifying the sensor signal along the result of the analysis, particularly to remove noise or inaccuracies identified by the analysis to obtain an improved estimated position of the rotating wheel. Exemplarily, for specific frequency ranges in an FFT-analysis being associated with noise, those frequencies may be removed prior to a back-transform of the signal from frequency-domain to time-domain.

In some embodiments, analyzing the sensor signal may comprise employing a trained machine learning (ML) model. In particular, the trained ML model may be trained upon sensor signals indicative of a measured position of the rotating wheel with labeled noise signals.

In some embodiments, the blade pitch control system comprises a noise sensor. The noise sensor is configured to sense a background noise signal present at the rotating wheel position sensor. The noise sensor may comprise a sensor configured to measure electromagnetic interference signals. In particular, the noise sensor may be configured to sense high-frequency electromagnetic fields. In some embodiments, the noise sensor may comprise a vibrational sensor, configured to measure mechanical vibrations, exemplarily originating from the electric motor of the cycloidal marine propulsion system, that may act upon the at least one rotating wheel position sensor and that may overlay the measured position of the rotating wheel in the sensor signal. Typically, the noise sensor is arranged in the vicinity of the at least one rotating wheel position sensor.

Typically, the data processing comprises a deconvolution of the sensor signal. In particular, the wheel position estimation unit may employ the background noise signal to perform a deconvolution of the sensor signal and to obtain the estimated position of the rotating wheel as a result of the deconvolution. Deconvoluting the sensor signal using a known and/or measured noise signal may advantageously allow to at least partially remove noise present in the sensor signal and to obtain an estimated position of the rotating wheel more representative of a real position of the rotating wheel.

The estimated position of the rotating wheel is employed by the blade pitch determining unit to determine a blade pitch for at least one of the plurality of rotating blades. In particular, determining the blade pitch comprises determining a blade pitch set point at each point in time. Typically, the plurality of blade pitch set points forms a blade pitch function, which defines a blade pitch angle for each position of the rotating wheel. Typically, the blade pitch set point is determined using the estimated position of the rotating wheel and the blade pitch function, exemplarily by inserting the estimated position of the rotating wheel into the blade pitch function and thereby calculating the blade pitch set point.

In some embodiments, the blade pitch determining unit is configured to determine a blade pitch set point for the plurality of rotating blades, in particular for each of the rotating blades of the cycloidal marine propulsion system. Typically, the cycloidal marine propulsion system comprises one blade pitch determining unit configured to determine the blade pitch for each of the rotating blades of the cycloidal marine propulsion system. In some embodiments, the blade pitch control system may comprise a plurality of blade pitch determining units, in particular one blade pitch determining unit per rotating blade.

Typically, the blade pitch set point is transmitted to a motor controller of the rotating blade. The motor controller determines a mechanical motion necessary to rotate the rotating blade according to the blade pitch set point. In particular, the motor controller determines a current necessary to induce a motion of the electric motor of the blade. A power stage provides the necessary electric power to the electric motor of the rotating blade to rotate the rotating blade. The rotation of the rotating blade is measured by a blade pitch sensor or blade rotation sensor. A signal of the blade pitch sensor is employed by the motor controller as a feedback to control the motion of the rotating blade and the pitch of the rotating blade.

Typically, the pitch of the blade, as well as the position of the rotating wheel, changes continuously. Thus, the blade pitch control system continuously provides a blade pitch set point, in particular along the blade pitch function, to the motor controller.

Embodiments of the present disclosure advantageously allow to improve the blade pitch control of rotating blades of cycloidal marine propulsion systems. Mitigating inaccuracies in the sensor signal of the rotating wheel advantageously improves an accuracy of the blade pitch set point. The cycloidal marine propulsion system can be operated more efficiently, in particular with respect to the hydrodynamic efficiency, and mechanical overloads may be minimized or avoided.

### BRIEF DESCRIPTION OF THE DRAWINGS

The accompanying drawings relate to embodiments of the disclosure and are described in the following:
- FIG 1: schematically illustrates a cycloidal marine propulsion system with a blade pitch control system according to the embodiments described herein embedded in a hull of a vessel;
- FIG 2: schematically the cycloidal marine propulsion system with the blade pitch control system of Fig. 2 with additional optional features;
- FIG 3: schematically illustrates a blade pitch control system according to embodiments described herein; and
- FIG 4: schematically illustrates a method of determining a blade pitch set point of a rotating blade of a cycloidal marine propulsion system according to embodiments described herein.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may distorted. Further, some elements may be depicted with enlarged dimensions while other elements in the same figure are depicted, relatively, with reduced dimensions.

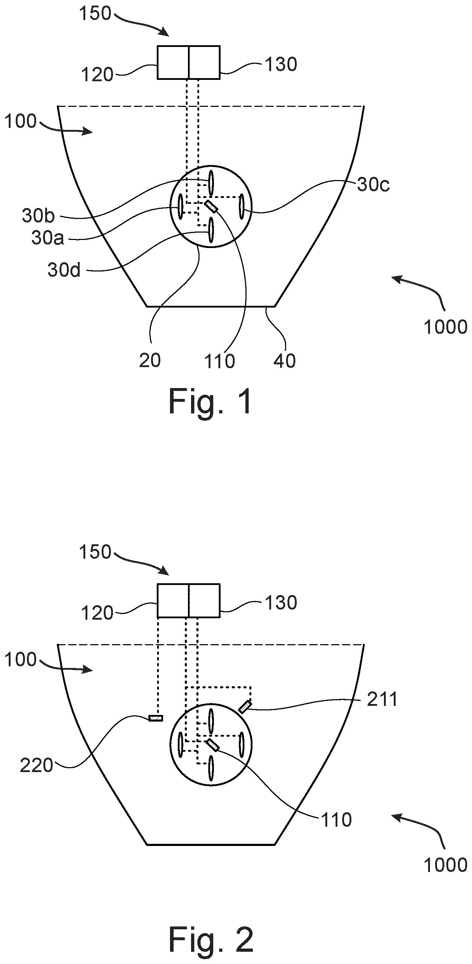

FIG 1 schematically illustrates a cycloidal marine propulsion system 1000 with a blade pitch control system 100 according to the embodiments described herein embedded in a hull 40 of a marine vessel. The cycloidal marine propulsion system 1000 comprises a rotating wheel 20 with four rotating blades 30a-30d. The blade pitch control system 100 comprises a rotating wheel position sensor 110. The rotating wheel position sensor 110 is configured to provide a sensor signal indicative of a measured position of the rotating wheel. The rotating wheel position sensor 110 is arranged substantially at a rotation axis of the rotating wheel 20, typically at the center of the rotating wheel 20. The sensor signal of the rotating wheel position sensor 110 is transmitted to the wheel position estimation unit 120.

The wheel position estimation unit 120 is configured to determine an estimated position of the rotating wheel. The estimated position of the rotating wheel is transmitted to the blade pitch determining unit 130. The blade pitch determining unit 130 determines a blade pitch set point for at least one of the plurality of rotating blades 30a-30d. The blade pitch determining unit 130 transmits a blade pitch set point for each of the rotating blades 30a-30d to the rotating blades 30a-30d, in particular to the motor controller of the rotating blades 30a-30d.The wheel position estimation unit 120 and the blade pitch determining unit 130 may be integrated in a programmable logic controller 150.

FIG 2 illustrates the cycloidal marine propulsion system 1000 with the blade pitch control system 100 of FIG 1 with additional optional features. The blade pitch control system 100 comprises a second rotating wheel position sensor 211. In FIG 2, the second rotating wheel position sensor 211 is arranged at an edge of the rotating wheel 20. However, different positions of the second rotating wheel position sensor 211 may be suitable in embodiments not shown in the figures. The sensor signal of the second rotating wheel position sensor 211 is transmitted to the wheel position estimation unit 120. The blade pitch control system 100 further comprises a noise sensor 220 configured to sense a background noise signal present at the rotating wheel 20 and particularly at the rotating wheel position sensor 110 and/or at the second rotating wheel position sensor 211. The wheel position estimation unit 120 is configured to determine the estimated position of the rotating wheel based upon the signal of the rotating wheel position sensor 110, the second rotating wheel position sensor 211 and/or the noise sensor 220.

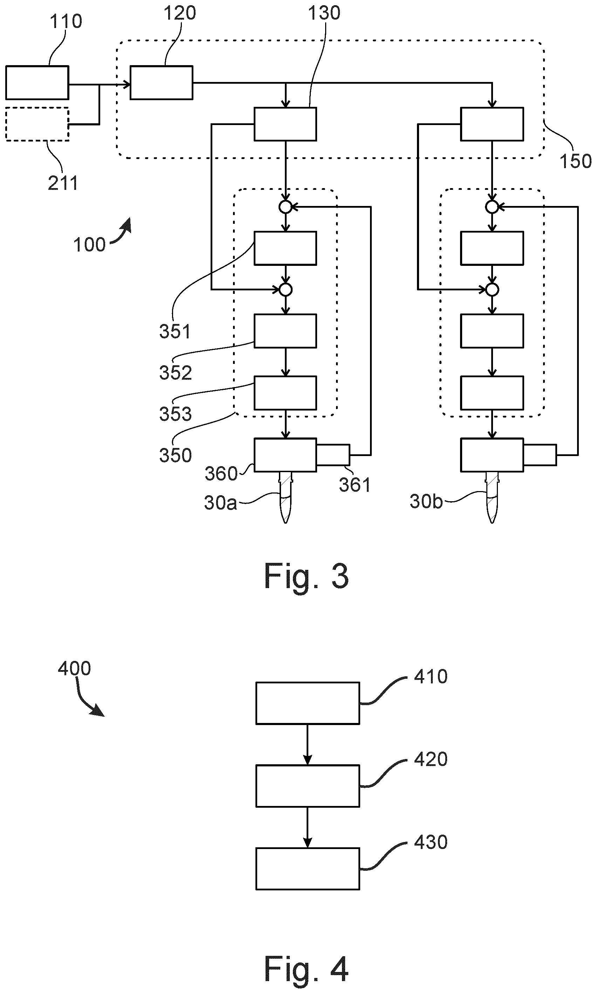

FIG 3 schematically illustrates the blade pitch control system 100 according to embodiments described herein. Sensor signals from at least one rotating wheel position sensor 110, 211 is transmitted to the wheel position estimation unit 120. The wheel position estimation unit determines an estimated position of the rotating wheel and provides the estimated position of the rotating wheel to the blade pitch determining unit 130. In FIG 3, only two rotating blades 30a, 30b are illustrated exemplarily. The below discussion for a first blade 30a is applicable for a second blade 30b as well as for cycloidal marine propulsion systems with a larger number of rotating blades. The blade pitch determining unit 130 provides a blade pitch set point to a motor controller 350 of the rotating blade 30a and particularly of the electric motor 360 of the rotating blade 30a. In the motor controller 350, a motion control stage 351 compares the blade pitch set point with the present blade pitch as provided by a blade pitch sensor 361. The motor controller 351 determines a suitable electric current to be supplied by the current controller 352. The current settings may be determined based upon a feed forward motion compensation provided by the blade pitch determining unit and particularly based upon a pitch function for the rotating blade. The electric current determined by the current controller 352 may comprise a current function, defining the electric current for a period of time. In a power stage 353, electric power is provided to power the electric motor 360 of the rotating blade 30a and to induce a mechanical rotation of the rotating blade 30a. The blade pitch sensor 361 provides a feedback to the motor controller 350.

FIG 4 schematically illustrates a method 400 of determining a blade pitch set point of a rotating blade of a cycloidal marine propulsion system according to embodiments described herein. The cycloidal marine propulsion system comprises a rotating wheel and a plurality of rotating blades attached to the rotating wheel and individually rotatable with respect to the rotating wheel. The method 400 comprises receiving 410 a sensor signal indicative of a measured position of the rotating wheel from at least one rotating wheel position sensor. The sensor signal received 410 is used for determining 420 an estimated position of the rotating wheel based upon the sensor signal of the at least one rotating wheel position sensor. The estimated position of the rotating wheel is used to determine 430 the blade pitch set point for at least one of the plurality of rotating blades based upon the estimated position of the rotating wheel.

## Claims

1. A blade pitch control system (100) for a cycloidal marine propulsion system (1000), the cycloidal marine propulsion system (1000) comprising a rotating wheel (20), and a plurality of rotating blades (30a-d) attached to the rotating wheel (20) and individually rotatable with respect to the rotating wheel (20), the blade pitch control system (100) comprising:
at least one rotating wheel position sensor (110, 211), configured to provide a sensor signal indicative of a measured position of the rotating wheel (20),
a wheel position estimation unit (120), configured to determine an estimated position of the rotating wheel based upon the sensor signal of the at least one rotating wheel position sensor (110, 211); and
a blade pitch determining unit (130), configured to determine a blade pitch set point for at least one of the plurality of rotating blades (30a-d) based upon the estimated position of the rotating wheel;
wherein determining the estimated position of the rotating wheel comprises a data processing of the sensor signal.

2. The blade pitch control system (100) of claim 1, wherein the measured position is indicative of a polar angle of the rotating wheel (20).

3. The blade pitch control system (100) of any of the preceding claims, wherein the data processing comprises a storing of the sensor signal.

4. The blade pitch control system (100) of any of the preceding claims, wherein the data processing comprises a smoothing of the sensor signal.

5. The blade pitch control system (100) of any of the preceding claims, wherein the data processing comprises a filtering of the sensor signal.

6. The blade pitch control system (100) of any of the preceding claims, wherein the data processing comprises an extrapolating of the sensor signal.

7. The blade pitch control system (100) of any of the preceding claims, comprising a plurality of rotating wheel position sensors (110, 211); and wherein the data processing comprises sensor fusion of the plurality of rotating wheel position sensors (110, 211).

8. The blade pitch control system (100) of any of the preceding claims, wherein the data processing comprises analyzing the sensor signal to identify a type of noise overlaying the sensor signal of the rotating wheel (20).

9. The blade pitch control system (100) of any of the preceding claims, wherein the blade pitch control system (100) further comprises a noise sensor (220) configured to sense a background noise signal present at the rotating wheel position sensor (110); and wherein the data processing comprises a deconvolution of the sensor signal.

10. A cycloidal marine propulsion system (1000) comprising a rotating wheel (20), a plurality of rotating blades (30a-d) attached to the rotating wheel (20) and individually rotatable with respect to the rotating wheel (20), and a blade pitch control system (100) according to any of the preceding claims.

11. A marine vessel comprising a cycloidal marine propulsion system (1000) according to claim 10.

12. A method (400) of determining a blade pitch set point of a rotating blade of a cycloidal marine propulsion system (1000), the cycloidal marine propulsion system (1000) comprising a rotating wheel (20) and a plurality of rotating blades (30a-d) attached to the rotating wheel (20) and individually rotatable with respect to the rotating wheel (20), the method (300) comprising:
receiving (410) a sensor signal indicative of a measured position of the rotating wheel from at least one rotating wheel position sensor (110, 211);
determining (420) an estimated position of the rotating wheel based upon the sensor signal of the at least one rotating wheel position sensor (110, 211); and
determining (430) the blade pitch set point for at least one of the plurality of rotating blades based upon the estimated position of the rotating wheel (20);
wherein determining the estimated position of the rotating wheel comprises a data processing of the sensor signal.

13. The method (400) of claim 12, wherein the data processing comprises at least one of a storing, a smoothing, a filtering, or an extrapolating of the sensor signal.

14. The method (400) of any of claims 12 to 13, wherein the data processing comprises analyzing the sensor signal to identify a type of noise overlaying the sensor signal of the rotating wheel.

15. A method of controlling a cycloidal marine propulsion system (1000) according to claim 10, using a blade pitch information obtained from a blade pitch control system (100) according to any of claims 1-9.
